# FASCICULE DE BREVET EUROPEEN

(11) **EP 0 718 145 B1**
(45) Date de publication et mention de la délivrance du brevet: **08.03.2000**
(21) Numéro de dépôt: 95420355.0
(22) Date de dépôt: 07.12.1995
(51) Int. Cl.: B60N 2/28

(54) **Siège-coque-transat notamment pour enfants en bas âge**
Ruhesitzschale für Kleinkinder
Resting seat shell for infants

(30) Priorité: 08.12.1994 FR 9415036
(43) Date de publication de la demande: 26.06.1996
(73) Titulaire: HUTCHINSON, 75008 Paris (FR)
(72) Inventeur: Allegre, Jean-Paul, F-42100 Saint Etienne (FR)
(74) Mandataire: Dupuis, François

(56) Documents cités:
- EP-A- 0 009 439
- EP-A- 0 363 556
- WO-A-94/12079
- DE-A- 4 208 599
- DE-C- 4 137 575
- FR-A- 2 554 336
- FR-A- 2 693 412
- US-A- 4 436 341
- US-A- 4 634 177
- US-A- 4 762 364
- US-A- 5 143 419

## Description

L'invention se rattache au secteur technique des sièges pour enfants, notamment utilisables comme sièges de sécurité, dans les automobiles, mais également comme sièges d'appartement, ainsi que sièges transportables.

Les sièges pour enfants connus sont généralement réalisés avec une partie monobloc en forme d'assise avec dosseret directement conformés par moulage ou roto-moulage selon une forme classique à obtenir. Ces sièges peuvent être disposés sur des embases-support qui assurent leur stabilité sur des plans d'appui au sol, ou sur des sièges arrière dans les véhicules automobiles.

Dans certains cas, les sièges pour enfants sont montés réglables en position par rapport à l'embase-support à l'aide de mécanismes de guidage et de tringlerie, avec levier de commande manuelle, permettant un positionnement en deux situations correspondant à une assise normale, ou à une position sensiblement inclinée pouvant conférer un état de relaxation.

Outre le fait que ces sièges sont de conception coûteuse, de par les mécanismes utilisés, il s'avère en pratique que les positions de l'enfant sont très limitées, et que le basculement de l'assise par rapport à l'embase-support ne permet pas de présenter l'enfant dans une position allongée sensiblement à l'horizontal, à la manière d'un hamac ou d'un lit. Par ailleurs, ce type de siège est d'un emploi limité et n'offre aucune diversité de positions et d'utilisations.

On connaît par ailleurs l'idée de réaliser des sièges pour enfants en deux composants articulés l'un par rapport à l'autre, tel que défini dans le préambule de la revendication indépendante et notamment décrit dans les brevets européens EP-A-0 363 556 et EP-A-0 009 439. Ces deux documents montrent la possibilité de modifier le siège dans deux positions assise ou allongée.

On connait aussi par le brevet US-A-5 143 419 l'utilisation d'une anse en tant que berceuse en position légèrement/partiellement relevée.

L'invention a essentiellement pour but de proposer un siège-coque-transat perfectionné qui offre un meilleur confort et une meilleure stabilité dans les deux positions assise ou allongée en permettant également dans le cadre d'une position allongée, d'utiliser l'ensemble ainsi créé à la manière d'un berceau.

Un autre but recherché selon l'invention était de réaliser un siège-coque-transat facilement manipulable et transportable, d'une grande légèreté et d'un réglage aisé pour sa mise en oeuvre dans l'une des positions choisies.

Ces buts et d'autres encore ressortiront bien de la suite de la description.

Selon une première caractéristique, le siège-coque-transat du type comprenant deux composants principaux formant dosseret et siège articulés l'un par rapport à l'autre, ces deux composants étant orientables angulairement l'un par rapport à l'autre pour assurer soit une fonction assise du siège-coque-transat, soit permettre une position à l'horizontal allongée de l'enfant, tout en permettant des positions intermédiaires, est caractérisé en ce l'un des composants définit, à la fois la partie dosseret du siège et plan d'appui avant, et l'autre composant définit la partie assise du siège et plan d'appui arrière de l'ensemble,
et en ce que ces deux composants sont conformés pour être disposés dans une configuration d'imbrication en croix, en étant articulés l'un par rapport à l'autre dans leur partie médiane transversale par le biais d'un moyen de liaison et de retenue,
et en ce que en position allongée de l'enfant, le siège coque-transat assure une fonction en bascule après relèvement partiel du siège.

Selon une autre caractéristique, le siège-coque-transat, comprend un filet ou bande en tissu ou autre matériau formant hamac dont une première extrémité est fixée sur la partie dosseret et l'autre extrémité sur la partie assise, ledit hamac étant en position horizontalité lorsque le siège coque-transat est en position allongée de l'enfant.

Selon une autre caractéristique de l'invention, le siège-coque-transat est agencé avec des moyens permettant le contrôle et le passage de sangles de sécurité uniquement lorsque le siège-coque-transat est en position assise en voiture, lesdites ceintures rendant impossible la transformation du siège-coque-transat en une position allongée.

Selon une autre caractéristique, le siège-coque-transat comprend un mécanisme de déblocage rapide de la anse nécessaire à sa préhension.

Ces caractéristiques et d'autres encore ressortiront bien de la suite de la description.

Pour fixer l'objet de l'invention illustrée d'une manière non limitative aux figures des dessins où :

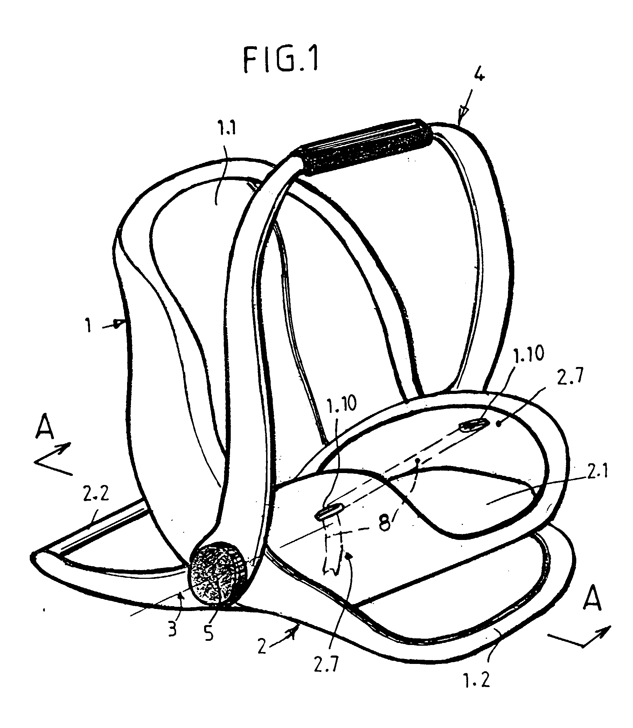

- la figure 1 est une vue en perspective du siège-coque-transat, selon l'invention,
- la figure 2 est une vue en perspective illustrant les deux composants du siège-coque-transat avant montage, dans une première mise en oeuvre d'articulation,
- la figure 3 est une vue de profil en coupe, selon la ligne A.A. de la figure 1, du siège-coque-transat en position assise, avec l'adjonction d'un filet formant hamac,
- la figure 4 est une vue, selon la figure 3, représentant le siège-coque-transat en position d'utilisation allongée, avec articulation et abaissement de la anse de préhension,
- la figure 5 est une vue de profil en variante illustrant un mode de réalisation de la partie assise du siège-coque-transat conformé directement avec la anse de préhension,
- la figure 6 est une vue de profil en variante illustrant le prolongement de l'extrémité inférieure de l'assise pour constituer un repose-jambes de l'enfant,
- la figure 7 est une vue en variante du siège-coque-transat dans une autre mise en oeuvre de réalisation et notamment son articulation et des moyens de passage et de guidage de sangles de sécurité,
- la figure 8 est une vue de profil et en coupe selon la figure 8 et la ligne 7-7 illustrant le siège-coque-transat dans une configuration allongée,
- la figure 9 est une vue similaire à la figure 9 du siège-coque-transat dans une position assise,
- la figure 10 est une vue en coupe partielle illustrant le mécanisme associé à la anse de préhension et permettant le réglage en position de celle-ci,
- la figure 11 est une vue en coupe longitudinale selon la ligne 10-10 de la figure 10.

Afin de rendre plus concret l'objet de l'invention, on le décrit maintenant d'une manière non limitative illustrée aux figures des dessins.

Le siège-coque-transat, selon l'invention, est remarquable en ce qu'il est réalisé en deux composants principaux (1 - 2) obtenus en plastique par injection ou roto-moulage, ou soufflage, ou pouvant être réalisés en tous autres matériaux. Ces composants définissent, l'un, à la fois la partie dosseret du siège et plan d'appui avant, et l'autre la partie assise du siège et plan d'appui arrière de l'ensemble.

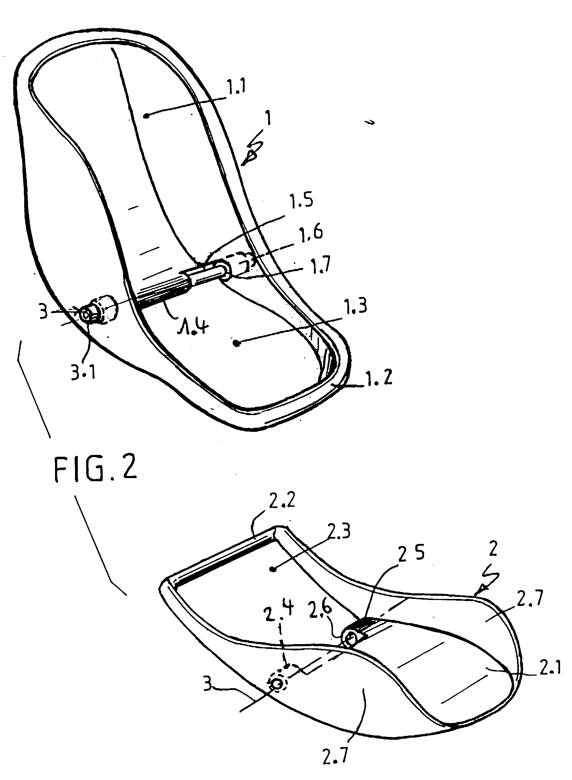

Ces deux composants (1 - 2) sont conformés pour être disposés dans une configuration d'imbrication en croix, en étant articulés l'un par rapport à l'autre dans leur partie médiane transversale par le biais d'un moyen de liaison (M) et de retenue, pouvant être un axe (3) comme représenté figure 2. Il constitue un ensemble rigide en position assise pour être conforme aux normes des sièges auto.

Ces composants sont orientables angulairement l'un par rapport à l'autre pour donner, soit une conformation en assise, soit une conformation en position allongée, tout en permettant des positions intermédiaires entre les extrêmes.

Le composant (1) comprend ainsi une partie profilée formant dosseret (1.1) se prolongeant dans sa partie avant par un plan d'appui (1.2) définissant par exemple un ceinturage en laissant apparaître une ouverture centrale (1.3) permettant le basculement de l'autre partie composante du siège-coque-transat.

Dans sa partie inférieure, la partie dosseret est conformée avec une forme en fourreau ou guide (1.4) établie sur une partie inférieure et centrale de la largeur du dosseret en définissant de part et d'autre des échancrures (1.5) de passage de pièces ou parties complémentaires formées sur l'autre composant (2).

Ledit fourreau est donc dans un plan transversal ou perpendiculaire à l'axe longitudinal du siège-coque-transat et, dans les parois latérales (1.6) de ce dernier, sont prévues des ouvertures (1.7) pour le passage de l'axe de rotation (3). Les côtés latéraux (1.6) sont profilés de toute manière souhaitée pour conférer une esthétique au produit qui lui soit propre.

Le second composant (2) comprend également deux zones distinctes principales avec une partie avant formant assise (2.1), se prolongeant à l'arrière par un ceinturage (2.2) conformé pour constituer le plan arrière d'appui du siège-coque-transat. Intérieurement au ceinturage, est prévue une ouverture (2.3) de dégagement, utile lors du basculement du siège-coque-transat.

Dans sa partie médiane transversale, le composant (2) comprend des formes (2.4 - 2.5) complémentaires et d'emboîtement avec celles (1.4) (1.5) établies sur la partie dosseret du siège-coque-transat. Ces dernières (2.4 ; 2.5) sont agencées avec une ouverture intérieure (2.6) pour le passage de l'axe de liaison (3) précité. Les côtés latéraux (2.7) de la partie assise sont relevés et profilés pour assurer une tenue latérale de l'enfant. Ce composant (2) s'intègre entièrement dans l'élément dosseret (1) précité, sa largeur étant inférieure à la largeur de la partie (1) et notamment de sa découpe (1.3) autorisant le passage du composant (2). L'axe de liaison (3) assurant l'assemblage de l'ensemble peut déborder à ses extrémités (3.1) pour autoriser le positionnement et l'articulation d'une anse (4) de préhension établie de toute forme appropriée. Des capuchons (5) ou équivalents sont vissés sur l'axe ou maintenus de manière appropriée pour assurer la finition de l'ensemble. Ces capuchons peuvent constituer des moyens de serrage par crantage ou équivalent permettant de fixer les positions de la partie dosseret par rapport à la partie assise.

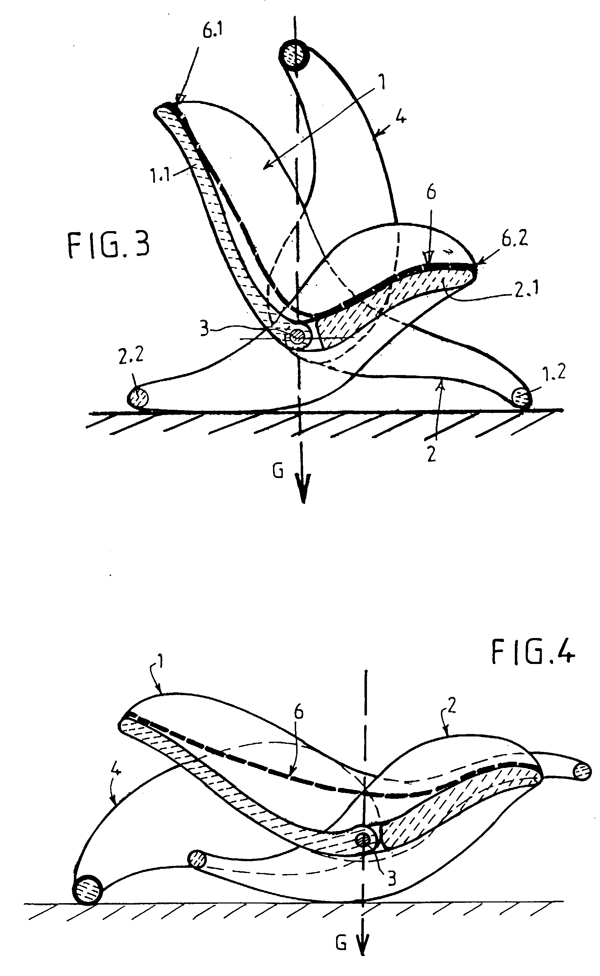

Ainsi qu'il apparaît à la figure 3 des dessins, le siège-coque-transat, en cas d'utilisation en position assise, est maintenu en appui au sol par les deux ceinturages (1.2 ; 2.2), la partie dosseret étant relevée.

Selon la figure 4, le siège-coque-transat est représenté en position d'utilisation allongée du bébé. Dans ce cas, la partie dosseret est abaissée en inclinaison, tandis que la anse (4) est rabattue vers l'arrière du siège-coque-transat de manière à permettre la formation d'un second appui derrière la tête de l'enfant. Le siège-coque-transat est donc maintenu en équilibre avec une partie dosseret permettant un allongement de l'enfant en toute sécurité. Dans ce cas, le siège-coque-transat assure une fonction bascule permettant de bercer l'enfant, la anse pouvant être légèrement relevée.

Dans une mise en oeuvre avantageuse, le siège-coque-transat peut assurer une fonction complémentaire de hamac (6). Ce dernier est établi sous forme d'un filet ou d'une bande en tissu ou autre matériau, dont une première extrémité (6.1) est fixée sur la partie dosseret et l'autre extrémité (6.2) est fixée sur la partie assise à des niveaux appropriés, ledit hamac étant en position horizontale lorsque l'enfant est en position allongée. Ces fixations sont établies de toute manière appropriée telle que par exemple, par collage, agrafage ou moyens auto-agrippants. La longueur du filet est définie de manière à permettre une tenue de l'enfant dans une position allongée à la manière d'un hamac, comme représenté figure 4. L'enfant est alors par rapport au fond de l'assise et du dosseret en position de suspension, ce qui augmente très largement son confort personnel. Cette partie hamac est réalisée en tout matériau approprié assurant le meilleur confort. La partie hamac est maintenue en tension de par l'écartement des composants (1 - 2) dans la configuration correspondante et le poids de l'enfant contribue à assurer la stabilité de l'ensemble.

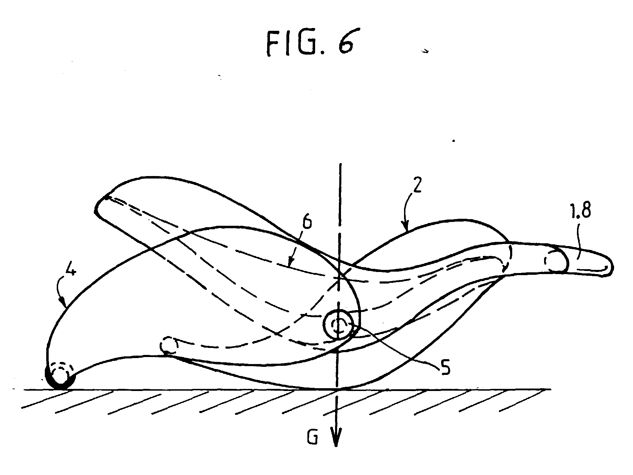

On a représenté par ailleurs à la figure 6 des dessins, un aménagement particulier de l'extrémité de l'élément (1) formant dosseret, dont la partie avant, formant ceinturage, est dans ce cas prolongée par un profil approprié (1.8) plein, pouvant constituer une rallonge repose-jambes de l'enfant.

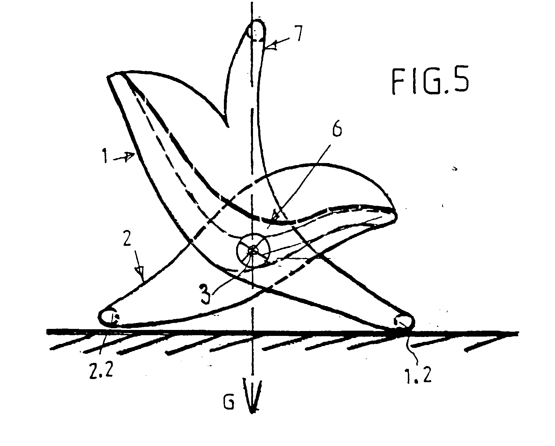

On a représenté à la figure 5 des dessins un aménagement en variante de la partie dosseret (1) qui est réalisée en matière plastique. Dans ce cas, la partie avant présente une forme de anse (7) conformée directement lors du moulage avec le dosseret et constituant la poignée de préhension. Ainsi, lors du basculement du siège-coque-transat dans son utilisation en position allongée, ce dernier prend appui principalement par le composant (2) formant assise et par son ceinturage arrière (2.2). L'ensemble est maintenu par gravité dans une position équilibrée par rapport à l'axe d'articulation des deux composants (1 - 2).

II est envisagé la formation de fentes ou découpes (1.10) sur les côtés latéraux du composant (2) formant assise pour permettre le passage de sangles de maintien (8) associées à des véhicules automobiles. La partie dosseret peut être conformée avec une découpe intérieure pour faciliter la prise de position par l'utilisateur en l'absence de anse.

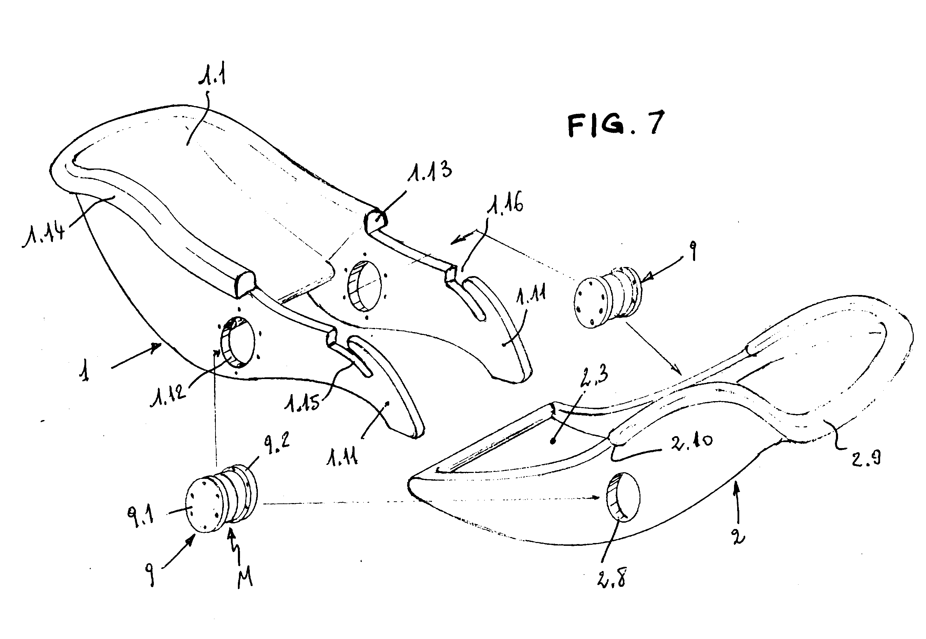

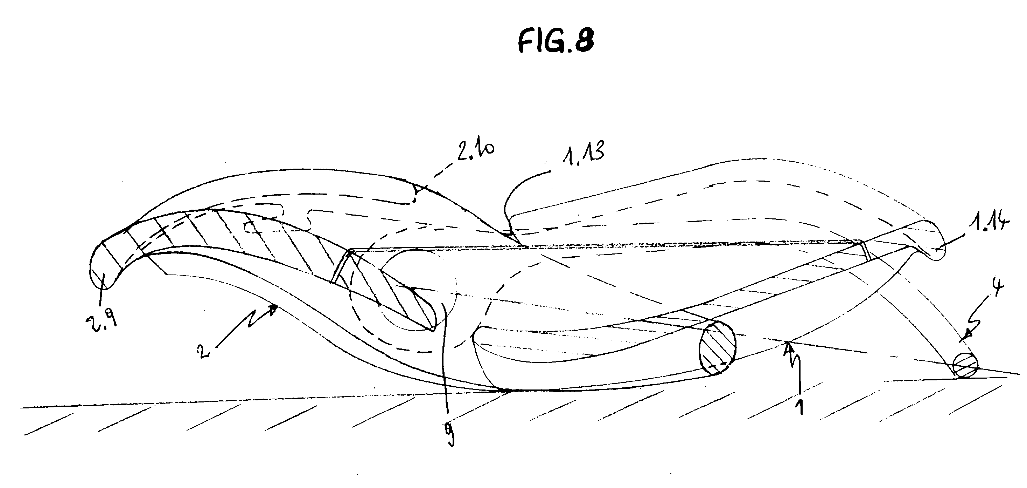

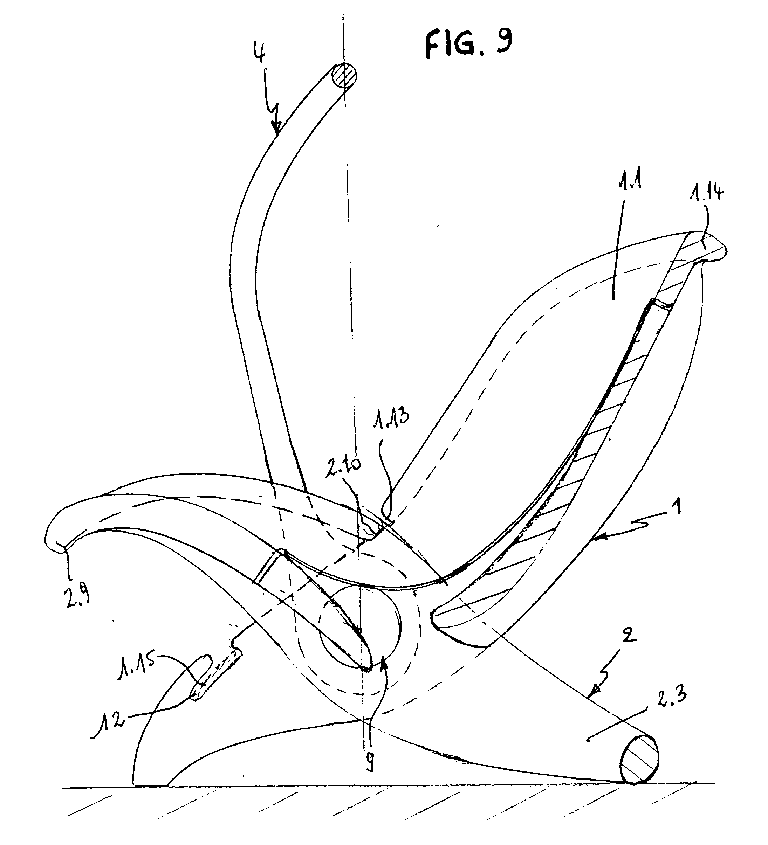

En se référant aux figures 7, 8 et 9 des dessins, on a représenté une autre variante de réalisation du siège-coque-transat tout en restant dans le concept de l'invention.

Dans ce cas, la partie principale formant dosseret (1.1) présente deux ailes (1.11) en prolongement longitudinal et parallèle profilées susceptible de s'introduire dans l'ouverture (2.3) ménagée sur la partie assise (2) du type précité. La liaison entre la partie dosseret et la partie assise s'effectue alors au moyen de deux embouts (9) profilés formant bague pénétrant dans des ouvertures circulaires (1.12 ; 2.8) formées sur les deux composants précités. Ces embouts constituent ainsi une portée circulaire permettant le pivotement et l'articulation des deux composants, lesdits embouts (9) étant aménagés à leurs extrémités avec des plaques (9.1; 9.2) de protection et d'appui formant bouchons. Lesdites ailes (1.11) sont par ailleurs aménagées avec un plan de butée (1.13) formé sur la bordure périphérique (1.14) de l'élément formant dosseret et susceptible de coopérer dans certaines conditions avec la bordure périphérique (2.9) agencée avec un plan de butée (2.10) formée sur l'autre composant formant assise. Ainsi, lorsque le siège-coque-transat est utilisé dans sa fonctionnalité d'assise, les plans de butée (1.13 et 2.10) viennent en contact l'un contre l'autre et limitent la position de ladite assise.

Par ailleurs et selon une autre disposition, lesdites ailes (1.11) sont aménagées avec des fentes (1.15) présentant une ouverture d'accès (1.16). Ces fentes sont établies sur une certaine longueur pour permettre le positionnement et l'engagement de coulissement de sangles de sécurité (12) prévues dans le véhicule automobile. Cesdites fentes (1.15) ont essentiellement pour fonction de permettre le passage des sangles lorsque le siège-coque-transat est en position assise. Par contre, leur présence ne permet pas la transformation du siège-coque-transat dans une position allongée car leur présence vient gêner et empêcher le basculement des composants dosseret et assise l'un par rapport à l'autre. Ces fentes assurent ainsi, d'une manière originale, une fonction de contrôle des conditions d'usage du siège-coque-transat.

Les bordures périphériques formées sur les deux composants siège et dosseret sont susceptibles de par leur forme recourbée vers l'intérieur de permettre le maintien et la tenue de la housse évitant que celle-ci puisse s'enlever facilement en cas d'effet de traction inopinée par l'enfant.

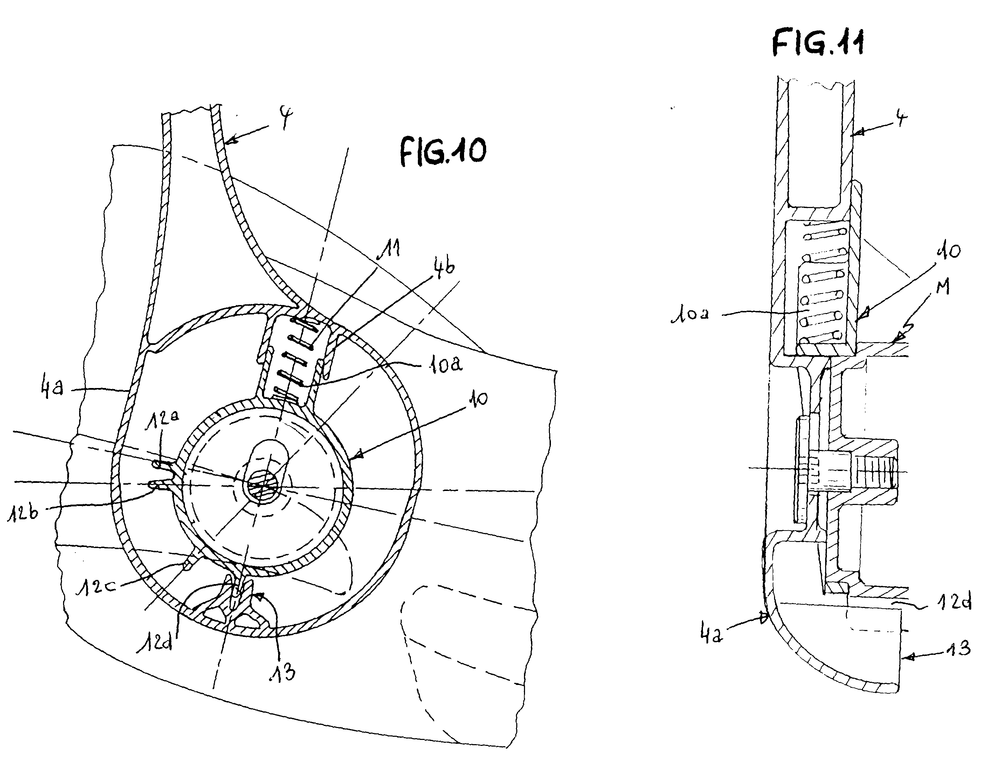

En se référant maintenant aux figures 10 et 11 des dessins, on a représenté une forme avantageuse de réglage en position de la anse de préhension. Ladite anse qui est référencée dans son ensemble par (4) est agencée à son extrémité (4.1) avec une base pour coopérer avec un embout fixe (10) solidaire de la zone d'articulation des deux composants dosseret et assise, cet embout pouvant être intégré avec le moyen (M) d'articulation des deux composants (1 et 2). Plus spécifiquement, la base (4a) de rotation de la anse est agencée avec une forme en couvercle circulaire (4b) susceptible de s'engager et de pivoter autour de l'embout (10) précité. Plus particulièrement, ledit embout présente extérieurement une cavité (10a) en saillie extérieure disposée dans un plan vertical fixe. Cette cavité est susceptible de recevoir une collerette intérieure (4b) circulaire intégrée à la base de la anse et contre laquelle vient également en appui l'extrémité d'un moyen de rappel élastique (11) du type ressort logé dans la cavité. Ledit embout présente par ailleurs radialement des saillies (12) en nombre approprié susceptible d'être positionnées angulairement à des endroits appropriés correspondant aux différentes positions de la anse.

On a représenté figure 10 quatre saillies (12a, 12b, 12c, 12d) respectivement pour les positions sommeil, relax, assise, couchée. Ces différentes saillies sont susceptibles de s'engager sous l'effet de détente du ressort de rappel (11) dans une forme (13) en fourchette établie à l'intérieur de la base (4a) de la anse. Ainsi, on comprend que, selon les positions respectives de la partie dosseret par rapport à la partie assise du siège-coque-transat, la anse vient s'encliqueter par l'une des saillies précitées dans la forme en fourchette, en assurant un blocage en position de la anse, dans la configuration souhaitée.

Il s'agit donc d'une sécurité complémentaire. Le déverrouillage de la anse s'effectue par une simple pression verticale à l'encontre du ressort de rappel en libérant la base de la anse par rapport à la saillie correspondante. La personne opératrice peut alors positionner comme elle le souhaite la anse et le siège-coque-transat dans la position la plus appropriée.

Les avantages ressortent bien de l'invention et en particulier, on souligne la nouvelle conception originale du siège-coque-transat, son faible coût de revient limité à deux pièces principales (1 - 2) avec un moyen de liaison et l'utilisation possible d'une anse de préhension. Dans certains cas, cette dernière assure une fonction complémentaire par rabattement vers l'arrière en contribuant à donner une plus grande stabilité à l'ensemble par une zone d'appui complémentaire. Les deux composants principaux sont réalisés en matière plastique dans des matières rigides, offrant toute liberté dans le choix des formes et de l'esthétique des produits.

On signale par ailleurs que, lorsque la anse de préhension est retournée vers l'arrière en contact avec le plan d'appui, l'ensemble du siège-coque-transat peut permettre une fonction de balancement par simple action manuelle alternative de la personne souhaitant endormir un enfant.

## Revendications

1. Siège-coque-transat du type comprenant deux composants principaux (1 - 2) formant dosseret et siège articulés l'un par rapport à l'autre, ces deux composants (1 - 2) étant orientables angulairement l'un par rapport à l'autre pour assurer soit une fonction assise du siège-coque-transat, soit permettre une position à l'horizontal allongée de l'enfant, tout en permettant des positions intermédiaires, caractérisé en ce que l'un des composants définit à la fois la partie dosseret du siège et plan d'appui avant, et l'autre composant définit la partie assise du siège et plan d'appui arrière de l'ensemble,
et en ce que ces deux composants (1 - 2) sont conformés pour être disposés dans une configuration d'imbrication en croix, en étant articulés l'un par rapport à l'autre dans leur partie médiane transversale par le biais d'un moyen (3) de liaison et de retenue,
et en ce que en position allongée de l'enfant, le siège-coque-transat assure une fonction en bascule après relèvement partiel de la anse.

2. Siège-coque-transat, selon la revendication 1, caractérisé en que l'élément (1) comprend ainsi une partie profilée formant dosseret (1.1) se prolongeant dans sa partie avant par un plan d'appui (1.2) définissant par exemple un ceinturage en laissant apparaître une ouverture centrale (1-3) permettant le basculement de l'autre partie composante du siège-coque-transat.

3. Siège-coque-transat, selon la revendication 2, caractérisé en ce que, dans sa partie inférieure, ladite pièce est conformée avec une forme en fourreau ou guide (1.4) établi sur une partie inférieure et centrale de la largeur du dosseret en définissant de part et d'autre des échancrures (1.5) de passage de pièces ou parties complémentaires formées sur l'autre composant (2),
et en ce que ledit fourreau est dans un plan transversal ou perpendiculaire l'axe longitudinal du siège-coque-transat et, dans les parois latérales (1.6) de ce dernier, sont prévues des ouvertures (1.7) pour le passage de l'axe de rotation (3).

4. Siège coque transat, selon l'une quelconque des revendications 1 à 3, caractérisé en ce que le second composant (2) comprend deux zones distinctes principales avec une partie avant formant assise (2.1), se prolongeant à l'arrière par un ceinturage (2.2) conformé pour constituer le plan arrière d'appui du siège-coque-transat,
et en ce que intérieurement au ceinturage, est prévue une ouverture (2.3) de dégagement, utile lors du basculement du siège-coque-transat.

5. Siège-coque-transat, selon l'une quelconque des revendications 1 à 4, caractérisé en ce que dans sa partie médiane transversale, le composant (2) comprend des formes (2.4 - 2.5) complémentaires et d'emboîtement avec celles (1.4 - 1.5) établies sur la partie dosseret du siège-coque-transat, ces dernières (2.4 - 2.5) étant agencées avec une ouverture intérieure (2.6) pour le passage de l'axe de liaison (3) précité.

6. Siège-coque-transat, selon l'une quelconque des revendications 1 à 5, caractérisé en ce que le composant (2) s'intègre entièrement dans l'élément dosseret (1), sa largeur étant inférieure à la largeur de la partie (1) et notamment de sa découpe (1.3) autorisant le passage du composant (2).

7. Siège-coque-transat, selon l'une quelconque des revendications 1 à 6, caractérisé en ce que l'axe de liaison (3) assurant l'assemblage de l'ensemble déborde à ses extrémités (3.1) pour autoriser le positionnement et l'articulation d'une anse (4) de préhension, des capuchons (5) ou équivalents étant vissés sur l'axe ou maintenus de manière appropriée pour assurer la finition de l'ensemble, et constituer des moyens de serrage.

8. Siège-coque-transat, selon l'une quelconque des revendications 1 à 7, caractérisé en ce qu'il comprend un filet ou bande en tissu ou autre matériau, formant hamac dont une première extrémité est fixée sur la partie dosseret et l'autre extrémité sur la partie assise, ledit hamac étant en position horizontalité lorsque le siège-coque-transat est en position allongée de l'enfant.

9. Siège-coque-transat, selon l'une quelconque des revendications 1 à 7, caractérisé en ce que l'élément (1) formant dosseret présente, dans sa partie avant, un profil complémentaire plein (1.8) constituant un repose-jambes de l'enfant.

10. Siège-coque-transat, selon l'une quelconque des revendications 1 à 7, caractérisé en ce que la anse de préhension, après rabattement arrière, constitue un plan d'arrêt complémentaire pour stopper l'effet de basculement.

11. Siège-coque-transat, selon l'une quelconque des revendications 1 à 7, caractérisé en ce que la partie dosseret est conformée directement avec une forme en retour (1.9) susceptible d'assurer une protection pare-soleil du siège-coque-transat.

12. Siège-coque-transat, selon l'une quelconque des revendications 1 à 7, caractérisé en ce que, lorsque la anse de préhension est retournée vers l'arrière en contact avec le plan d'appui, l'ensemble du siège-coque-transat assure une fonction de balancement.

13. Siège-coque-transat selon l'une quelconque des revendications 1,4 et 8, caractérisé en ce que la partie principale formant dosseret (1.1) présente deux ailes (1.11) en prolongement longitudinal et parallèle susceptibles de s'introduire dans l'ouverture (2.3) ménagée sur la partie assise (2), la liaison étant assurée à l'aide de deux embouts (9) formant bagues pénétrant dans des ouvertures circulaires (1.12 ; 2.8) formées sur les deux composants.

14. Siège-coque-transat selon l'une quelconque des revendications 1 et 13, caractérisé en ce que les deux composants (1 et 2) formant dosseret et assise sont agencés avec des bordures périphériques (1.14 et 2.9) présentant des plans de butée (1.13 et 2.10) délimitant l'articulation des composants entre eux dans la configuration en forme de siège.

15. Siège-coque-transat selon l'une quelconque des revendications 1, 13 et 14, caractérisé en ce que les ailes (1.11) de la partie dosseret sont aménagées avec des fentes (1.15) présentant une ouverture d'accès (1.16) et autorisant l'insertion de sangles de sécurité prévues dans le véhicule automobile, lesdites fentes assurant le passage des sangles exclusivement en position assise du iège-coque-transat.

16. Siège-coque-transat selon l'une quelconque des revendications 1, 13 et 14, caractérisé en ce que les bordures périphériques formées sur les deux composants siège et dosseret sont conformées avec une partie recourbée vers l'intérieur permettant le maintien et la tenue de la housse.

17. Siège-coque-transat selon l'une quelconque des revendications 1 et 13, caractérisé en ce que la anse (4) est agencée à l'endroit de sa base (4a) avec une forme en chapeau susceptible de s'engager autour d'un embout fixe (10) solidaire de la zone d'articulation des deux composants,
et en ce que ladite anse est indexée en position par rapport à l'embout fixe à l'aide d'une pluralité de moyens coopérant entre eux, le dégagement de la anse s'effectuant à l'aide d'un moyen de rappel (11) solidaire de l'embout (10) par rapport à la base de la anse.

18. Siège-coque-transat selon la revendication 17, caractérisé en ce que l'embout fixe (10) présente extérieurement une cavité (10a) en saillie disposée dans un plan vertical et recouverte par une collerette intérieure circulaire intégrée à la base de la anse, un moyen élastique de rappel (11) du type ressort prenant appui dans la cavité et contre le fond de la collerette en assurant par compression sous l'action de poussée de la anse vers le bas le dégagement de celle-ci par rapport à l'embout,
et en ce que des moyens sous forme de saillies (12a, 12b, 12c, 12d) sont formées radialement sur l'embout pour coopérer alternativement avec une forme (13) en fourchette établie à l'intérieur de la base de la anse pour former accouplement avec l'une desdites saillies.

## Patentansprüche

1. Ruhesitzschale für Kleinkinder aus zwei Hauptbauteilen (1 - 2) in Form einer Lehne und eines Sitzes, die gelenkig miteinander verbunden sind,
wobei diese beiden Bauteile (1 - 2) winkelig zueinander verstellbar sind, um entweder für eine Sitzfunktion der Ruhesitzschale zu sorgen oder eine waagrechte Liegeposition des Kindes sowie Zwischenpositionen zu ermöglichen,
dadurch gekennzeichnet, daß eines der Bauteile gleichzeitig den Rückenlehnenteil des Sitzes und die vordere Auflagefläche beschreibt, während das andere Bauteil den Sitzflächenteil des Sitzes und die hintere Auflagefläche der Baueinheit beschreibt,
und daß die beiden Bauteile (1 - 2) so ausgebildet sind, daß sie über Kreuz ineinandergreifen, wobei sie im mittleren querverlaufenden Teil über eine Verbindungs- und Rückhalteeinrichtung (3) gelenkig zueinander gelagert sind,
und daß die Ruhesitzschale in der Liegeposition des Kindes nach teilweisem Anheben des Bügels eine Wiegefunktion gewährleistet.

2. Ruhesitzschale nach Anspruch 1, dadurch gekennzeichnet, daß das Element (1) einen profilierten rückenlehnenbildenden Teil (1.1) umfaßt, der im vorderen Teil durch eine Auflagefläche (1.2) verlängert wird, die z.B. eine Umfassung umschreibt und dabei eine mittlere Öffnung (1.3) in Erscheinung treten läßt, die das Kippen des anderen Bauteils der Ruhesitzschale ermöglicht.

3. Ruhesitzschale nach Anspruch 2, dadurch gekennzeichnet, daß das besagte Element im unteren Teil mit einer Hülsenform bzw. Führung (1.4) an einem unteren und mittleren Teilstück der Rückenlehnenbreite ausgebildet ist und dabei beiderseits Einkerbungen (1.5) für die Durchführung von ergänzenden Stücken oder Teilen am anderen Bauteil (2) umschreibt,
und daß die Hülse quer bzw. senkrecht zur Längsachse der Ruhesitzschale verläuft und in deren Seitenwänden (1.6) Öffnungen (1.7) für die Durchführung der Drehachse (3) vorgesehen sind.

4. Ruhesitzschale nach einem der vorhergehenden Ansprüche, dadurch gekennzeichnet, daß das zweite Bauteil (2) zwei unterschiedliche Hauptbereiche mit einem sitzbildenden Vorderteil (2.1) umfaßt, der hinten durch eine Umfassung (2.2) verlängert wird, die so ausgebildet ist, um die hintere Auflagefläche der Ruhesitzschale zu bilden,
und daß innerhalb der Umfassung eine Ausparungsöffnung vorgesehen ist, die beim Kippen der Ruhesitzschale von Nutzen ist.

5. Ruhesitzschale nach einem der vorhergehenden Ansprüche, dadurch gekennzeichnet, daß das Bauteil (2) im mittleren querverlaufenden Teil komplementäre Formen (2.4 - 2.5) zum Einstecken in die Formen (1.4 - 1.5) auf dem Rückenlehnenteil der Ruhesitzschale aufweist, wobei letztere (2.4 - 2.5) innen mit einer Öffnung (2.6) für die Durchführung der vorgenannten Verbindungsachse (3) ausgebildet sind.

6. Ruhesitzschale nach einem der vorhergehenden Ansprüche, dadurch gekennzeichnet, daß das Bauteil (2) ganz in das Rückenlehnenteil (1) integriert wird, wobei die Breite geringer ist als diejenige des Rückenlehnenteils (1) und insbesondere des Ausschnitts (1.3) für die Durchführung des Bauteils (2).

7. Ruhesitzschale nach einem der vorhergehenden Ansprüche, dadurch gekennzeichnet, daß die Verbindungsachse (3) für das Zusammenfügen der gesamten Schale an den Enden (3.1) vorsteht, um die Positionierung und gelenkige Lagerung eines Tragebügels (4) zu ermöglichen, wobei Abdeckkappen (5) o. ä. auf der Achse festgeschraubt oder in zweckmäßiger Weise fixiert werden, um das Ganze optisch abzurunden und als Spanneinrichtung zu dienen.

8. Ruhesitzschale nach einem der vorhergehenden Ansprüche, dadurch gekennzeichnet, daß sie ein hängemattenbildendes Netz bzw. Band aus Stoff oder einem sonstigen Material umfaßt, von dem ein Ende am Rückenlehnenteil und das andere Ende am Sitzflächenteil befestigt ist, wobei die Hängematte waagrecht verläuft, wenn sich die Ruhesitzschale in Liegeposition des Kindes befindet.

9. Ruhesitzschale nach einem der Ansprüche 1 - 7, dadurch gekennzeichnet, daß das rückenlehnenbildende Element (1) im vorderen Teil ein ergänzendes Vollprofilstück (1.8) aufweist, das eine Beinauflage für das Kind bildet.

10. Ruhesitzschale nach einem der Ansprüche 1 - 7, dadurch gekennzeichnet, daß der nach hinten umgelegte Tragebügel eine zusätzliche Arretierfläche bildet, um die Kippwirkung zu stoppen.

11. Ruhesitzschale nach einem der Ansprüche 1 - 7, dadurch gekennzeichnet, daß das Rückenlehnenteil unmittelbar mit einer rückspringenden Form (1.9) ausgebildet ist, die geeignet ist, einen Sonnenschutz der Ruhesitzschale zu gewährleisten.

12. Ruhesitzschale nach einem der Ansprüche 1 - 7, dadurch gekennzeichnet, daß das gesamte System der Ruhesitzschale für eine Schaukelfunktion sorgt, wenn der Tragebügel nach hinten in Kontakt mit der Auflagefläche umgelegt ist.

13. Ruhesitzschale nach einem der Ansprüche 1, 4 und 8, dadurch gekennzeichnet, daß der rückenlehnenbildende Hauptteil (1.1) in längsseitiger Verlängerung zwei parallele Flügelstücke (1.11) aufweist, die geeignet sind, in die Öffnung (2.3) am Sitzflächenteil (2) einzugreifen, wobei die Verbindung durch zwei ringförmige Ansatzstücke (9) gewährleistet wird, die in kreisförmige Öffnungen (1.12; 2.8) an den beiden Bauteilen eindringen.

14. Ruhesitzschale nach einem der Ansprüche 1 und 13, dadurch gekennzeichnet, daß die beiden Bauteile (1 und 2) für Rückenlehne und Sitzfläche mit Umrandungen (1.14 und 2.9) versehen sind und Anschlagflächen (1.13 und 2.10) aufweisen, mit denen die gelenkige Bewegung der Bauteile zueinander in der sitzbildenden Konfiguration begrenzt wird.

15. Ruhesitzschale nach einem der Ansprüche 1, 13 und 14, dadurch gekennzeichnet, daß die Flügelstücke (1.11) des Rückenlehnenteils Schlitze (1.15) besitzen, die eine Zugangsöffnung (1.16) aufweisen und das Einführen von im Kraftfahrzeug vorgesehenen Sicherheitsgurten ermöglichen, wobei die Schlitze die Durchführung der Gurte ausschließlich in der Sitzposition der Ruhesitzschale gewährleisten.

16. Ruhesitzschale nach einem der Ansprüche 1, 13 und 14, dadurch gekennzeichnet, daß die Außenumrandungen an den beiden Bauteilen Sitz und Rückenlehne mit einem nach innen umgebogenen Teil für den festen Halt der Hülle ausgebildet sind.

17. Ruhesitzschale nach einem der Ansprüche 1 und 13, dadurch gekennzeichnet, daß der Tragebügel (4) an seiner Basis (4a) eine hutartige Form besitzt, die geeignet ist, ein ortsfestes Ansatzstück (10) zu umgeben, das mit der Gelenkzone der beiden Bauteile fest verbunden ist,
und daß dieser Bügel gegenüber dem ortsfesten Ansatzstück mit Hilfe mehrerer, untereinander zusammenwirkender Einrichtungen in einer Raststellung fixiert wird, wobei das Lösen des Bügels durch eine Rückholeinrichtung (11) erfolgt, die gegenüber der Basis des Bügels mit dem Ansatzstück (10) fest verbunden ist.

18. Ruhesitzschale nach Anspruch 17, dadurch gekennzeichnet, daß das ortsfeste Ansatzstück (10) außen eine vorspringende Vertiefung (10a) aufweist, die in einer senkrechten Ebene angeordnet und durch einen kreisförmigen, in die Basis des Bügels integrierten Bund überzogen ist, wobei eine federartige elastische Rückholeinrichtung (11) in der Vertiefung und am Boden des Bundes aufliegt und unter Schubeinwirkung des Bügels nach unten durch Zusammendrücken für dessen Freisetzung gegenüber dem Ansatzstück sorgt,
und daß vorspringende Einrichtungen (12a, 12b, 12c, 12d) radial am Ansatzstück ausgebildet sind, um abwechselnd mit einer gabelartigen Form (13) innerhalb der Bügelbasis zusammenzuwirken und dadurch mit einem der Vorsprünge eine Verbindung herzustellen.

## Claims

1. Resting seat shell for infants of a type comprising two main components (1 - 2) that form a seat cowling and a seat that are hinged together, it being possible to adjust the angle of these two components (1 - 2) in relation to each other to provide either a seating function of the resting seat shell for infants, or to allow a horizontal lying down position for the infant, while allowing intermediate positions, characterised in that one of the components provides, at the same time, the seat cowling part and the forward bearing surface, and the other component provides the seating part and the rear bearing surface of the assembly,
and, in that these two components (1 - 2) are formed to be fitted in a cross bracketed configuration, and are hinged together at their transversal median points by means of a link and restraint (3),
and in that in the lying down position of the child, the resting seat shell for infants provides a rocking function after partially raising the handle.

2. Resting seat shell for infants, according to Claim 1, characterised in that the element (1) thus comprises a profiled part that forms the seat cowling (1.1) that extends in its forward part through a bearing surface (1.2) in the form of, for example, a girdle while leaving a central opening apparent (1.3) that allows the other component part of the resting seat shell for infants to be tilted.

3. Resting seat shell for infants, according to Claim 2, characterised in that, in its lower part, the said part is formed with a sheath or guide (1.4) fitted on the lower part the seat cowling, at a central point in relation to its width, and having on either side indentations (1.5) for passing between complementary items or parts formed on the other component (2),
and in that the said sheath is in a transversal plane or perpendicular to the longitudinal axis of the resting seat shell for infants, and openings (1.7) for passing through the hinging axle (3) are fitted in the side walls (1.6) of this latter part.

4. Resting seat shell for infants according to any of the Claims 1 to 3, characterised in that the second component (2) comprises two distinct main areas with a forward part forming the seat (2.1) that extends backwards via a girdle (2.2) formed to constitute the rear bearing surface of the resting seat shell for infants,
and in that on the inside of the girdle, a clearance opening (2.3), useful when the resting seat shell for infants is tilted, is formed.

5. Resting seat shell for infants according to any of the Claims 1 to 4, characterised in that in its median transversal part, the component (2) comprises shapes (2.4 - 2.5) that complement and interlock into those (1.4 - 1.5) fitted on the seat cowling part of the resting seat shell for infants, these latter (2.4 - 2.5) being formed with an internal opening (2.6) to allow the hinging axle (3) described previously to pass through.

6. Resting seat shell for infants according to any of the Claims 1 to 5, characterised in that the component (2) interlocks completely into the seat cowling element (1), its width being less than the width of the part (1) and, in particular, its cut away part (1.3) allowing the component (2) to be passed through.

7. Resting seat shell for infants according to any of the Claims 1 to 6, characterised in that the hinging axle (3), which ensures that the whole assembly fits together, juts out at its ends (3.1) to allow a carrying handle (4) to be positioned and articulated, the end covers (5) or equivalent being screwed onto the axle or maintained in an appropriate manner to ensure the finishing touches to the assembly, and to constitute a means of tightening.

8. Resting seat shell for infants according to any of the Claims 1 to 7, characterised in that it comprises a net or strip made out of fabric, or any other material, forming a hammock that has one end attached to the seat cowling part and the other end attached to the seating part, the said hammock being in a horizontal position when the resting seat shell for infants is in a lying down position for the infant.

9. Resting seat shell for infants according to any of the Claims 1 to 7, characterised in that the element (1) forming the seat cowling has, in its forward part, a solid complementary profile (1.8) that constitutes a leg rest for the infant.

10. Resting seat shell for infants according to any of the Claims 1 to 7, characterised in that the carrying handle, after being pulled down backwards, constitutes a complementary stop plane that stops the effect of tilting.

11. Resting seat shell for infants according to any of the Claims 1 to 7, characterised in that the seat cowling part is formed directly with an inturned form (1.9) capable of acting as a sun shade for the resting seat shell for infants.

12. Resting seat shell for infants according to any of the Claims 1 to 7, characterised in that, when the carrying handle is turned backwards in contact with the bearing surface, the resting seat shell for infants assembly provides a rocking function.

13. Resting seat shell for infants according to any of the Claims 1, 4 and 8, characterised in that the main part forming the seat cowling (1.1) has two parallel side wings (1.11) extending lengthwise that may be fitted into the opening (2.3) designed on the seating part (2), the link being ensured using two end fittings (9) forming rings that penetrate into circular openings (1.12; 2.8) formed on the two components

14. Resting seat shell for infants according to any of the Claims 1 and 13, characterised in that the two components (1 and 2) forming the seat cowling and the seat are fitted with peripheral edges (1.14 and 2.9) that have edges formed into end stops (1.13 and 2.10) that limit the articulation of the components in relation to each other in the configuration in the form of a seat.

15. Resting seat shell for infants according to any of the Claims 1, 13 and 14, characterised in that the side wings (1.11) of the seat cowling part are designed with slots (1.15) with an opening (1.16) that allows safety straps that feature in automotive vehicles to be inserted, the said slots ensuring that the straps may only be passed through when the resting seat shell for infants is used in the sitting position.

16. Resting seat shell for infants according to any of the Claims 1, 13 and 14, characterised in that the peripheral edges formed on the two components, seat and seat cowling, are produced with a part curved towards the interior that allows the cover to be held and maintained in place.

17. Resting seat shell for infants according to any of the Claims 1 and 13, characterised in that the handle (4) is fitted at the position of its base (4a) with a shape in the form of a hat that may be engaged around a fixed end fitting (10) interdependent with the area of articulation of the two components,
and in that the said handle is indexed in position in relation to the fixed end fitting using a plurality of co-operating means, the clearance of the handle being carried out using a return means of a spring type (11) interdependent with the end fitting (10) in relation to the base of the handle.

18. Resting seat shell for infants according to Claim 17, characterised in that the fixed end fitting (10) has a protruding external cavity (10a) that is arranged in a vertical plane and is covered with an internal circular collar integrated in the base of the handle, an elastic return means of a spring type (11) that is held in the cavity and up against the bottom of the ring ensuring, under the compressive action of pushing on the handle towards the bottom, the clearance of this in relation to the end fitting.
and in that means in the shape of protuberances (12a, 12b, 12c, 12d) are formed in a radial manner on the end fitting to interact alternatively with a form (13) in the shape of a fork fitted on the interior of the base of the handle to form a coupling with one of the said protuberances.
